# FASCICULE DE BREVET EUROPEEN

(11) **EP 0 489 813 B1**
(45) Date de publication et mention de la délivrance du brevet: **26.10.1994**
(21) Numéro de dépôt: 90913219.3
(22) Date de dépôt: 23.08.1990
(51) Int. Cl.: B60S 1/34

(54) **SYSTEME D'ESSUIE-GLACE A FORCE DE CONTACT REGLABLE A DISTANCE**
SCHEIBENWISCHERSYSTEM MIT FERNGESTEUERTER BERÜHRUNGSKRAFTREGELUNG
WINDSHIELD WIPER SYSTEM WITH REMOTE ADJUSTABLE CONTACT FORCE

(30) Priorité: 28.08.1989 FR 8911469
(43) Date de publication de la demande: 17.06.1992
(73) Titulaire: Bacconnier, Raymond, F-26500 Bourg-les-Valence (FR)
(72) Inventeur: Bacconnier, Raymond, F-26500 Bourg-les-Valence (FR)
(74) Mandataire: Thibault, Jean-Marc
(86) Numéro de dépôt international: FR9000624
(87) Numéro de publication internationale: WO9103394

(56) Documents cités:
- DE-A- 3 444 927
- FR-A- 2 507 554

## Description

### DOMAINE TECHNIQUE :

La présente invention concerne les systèmes d'essuie-glaces chargés d'assurer l'évacuation des filets d'eau s'écoulant sur les vitres ou sur le pare-brise de véhicules, ainsi que le nettoyage de la surface à travers laquelle s'effectue la vision.

Les systèmes d'essuie-glaces soit montés sur différents types de véhicules et, notamment, sur des véhicules automobiles, du type voitures, camions, cars.

La présente invention s'applique, non seulement aux types de véhicules précédemment mentionnés, mais, également, à toute structure mobile ou non et possédant un pare-brise dont au moins une portion de la surface est parcourue par un essuie-glace, tel des navires ou des trains par exemple.

### TECHNIQUE ANTERIEURE :

Les systèmes d'essuie-glace classiques comprennent, généralement, un bras d'essuie-glace sur lequel est monté un balai d'essuyage et une noix de support reliée, par une extrémité, au bras de l'essuie-glace et, par une autre extrémité, à un organe moteur chargé de conférer un mouvement de va-et-vient à l'ensemble du système d'essuie-glace.

Le balai d'essuie-glace est maintenu en contact contre la surface à essuyer au moyen d'un ressort chargé de créer une force de rappel appliquant le balai d'essuie-glace contre la surface à essuyer. Le ressort est, généralement, monté, par une extrémité, sur le bras d'essuie-glace et, par son autre extrémité, sur la noix de support.

Les systèmes d'essuie-glace de l'art antérieur, utilisant ce principe, peuvent être considérés comme assumant, de manière satisfaisante, les fonctions d'essuyage et de balayage lorsque les conditions d'utilisation n'impliquent pas une vitesse élevée du véhicule sur lequel est monté le système, ou lorsque les conditions générales atmosphériques ne comportent pas de fortes amplitudes, de mouvement, de vent et de débit d'eau.

Il a, en effet, été constaté que, dans le cas d'une vitesse élevée du véhicule, les bras d'essuie-glace étaient soumis à une force engendrant un décollement de l'essuie-glace par rapport à la surface à essuyer, cette force étant d'autant plus importante que la vitesse du véhicule est élevée. Ce décollement est également d'autant plus accentué que la longueur du bras d'essuie-glace augmente et que le débit d'eau s'accroît. La forme généralement bombée des pare-brises automobiles contribue, également, à favoriser le décollement des bras d'essuie-glace. Ce phénomène conduit, bien évidemment, à une efficacité réduite de l'essuyage réalisé par les bras d'essuie-glace.

Le problème ainsi identifié est d'autant plus important que la vitesse moyenne des véhicules automobiles tend à s'accroître constamment et que le recours à des systèmes d'essuie-glace utilisant un seul bras d'essuie-glace se généralise, alors même que la recherche d'une plus grande sécurité de conduite par tous les temps demeure une préoccupation essentielle des professionnels.

Il a déjà été proposé d'avoir recours à des déflecteurs montés sur le bras ou le balai d'essuyage. Ces déflecteurs ont une forme aérodynamique spécialement étudiée pour pouvoir créer, par appui avec le vent relatif créé par le déplacement du véhicule dans l'air, une force de rappel additionnelle contribuant à annuler ou à réduire la force de décollement des essuie-glaces. Cette solution demeure, cependant, d'un emploi limité, en raison de la surface nécessairement réduite des déflecteurs, puisqu'ils ne doivent pas réduire le champ de vision du conducteur. L'effet de la force additionnelle de contact reste donc limité. Il convient, en outre, de tenir compte de l'aspect inesthétique de tels dispositifs et de leur effet de traîne.

On connaît également la solution proposée par la demande de brevet française **FR-A-2 516 461** qui consiste à monter, sur l'axe d'entraînement du bras d'essuie-glace, une chambre étanche dans laquelle est monté un piston coulissant dans un cylindre. Le piston et le cylindre constituent un ensemble hydraulique alimenté par un fluide, le piston s'appliquant, par l'intermédiaire d'un levier télescopique, sur le bras de l'essuie-glace. Ce dernier est, par ailleurs, soumis de manière classique à une force de rappel contre le pare-brise, par l'intermédiaire d'un ressort. Ce dispositif permet ainsi, grâce à la poussée du piston sur le levier, de fournir une force additionnelle de rappel du bras vers le pare-brise. La solution préconisée nécessite d'avoir recours à un apport d'énergie supplémentaire, à savoir une énergie hydraulique rendant la mise en oeuvre d'une telle solution incompatible avec la recherche d'un coût de production aussi faible que possible.

Par ailleurs, le recours à un système hydraulique, par les risques de panne et de fuite de circuit qui sont à encourir, n'est pas une solution appropriée dans le cas de véhicules destinés à être utilisés par un large public et pour lesquels la recherche en matière de fiabilité et de sécurité est un impératif constant. La solution proposée souffre, par ailleurs, d'une relative fragilité liée aux risques de torsion et de blocage susceptibles de survenir au niveau du levier télescopique.

On connaît, aussi, une autre proposition décrite dans la demande de brevet française **FR-A-2 427 226**. La solution préconisée consiste à fournir une force additionnelle de rappel du bras d'essuie-glace en direction du pare-brise, le bras d'essuie-glace étant soumis, de manière classique, à une force de rappel constante résultant d'un ressort fixé, par une extrémité, sur le bras d'essuie-glace et, par une autre extrémité, sur une tige de maintien en relation avec la noix de support du système d'essuie-glace.

La tige de maintien est solidaire d'un levier, pivotant sur la noix de fixation autour d'un axe, et disposée dans un intervalle ménagé entre les deux branches de la noix de support. L'extrémité du levier, opposée à l'axe de pivotement, est constituée par un élément coudé lié mécaniquement à une tige mobile longitudinalement dans un alésage pratiqué dans l'axe d'entraînement de l'essuie-glace. Un moteur électrique ou un électro-aimant commande le déplacement en va-et-vient de la tige mobile dans l' alésage. Ce déplacement assure, grâce à la liaison mécanique, le pivotement du levier autour de son axe de rotation, le levier pouvant alors prendre deux positions stables situées, respectivement, de part et d'autre d'un plan passant par l'axe de pivotement du levier et l'extrémité de fixation du ressort sur le bras d'essuie-glace. La position stable et haute du levier correspond à une extension maximale de la tige mobile et à une force de rappel, dite normale, du balai d'essuie-glace contre le pare-brise. Le passage de la position stable haute vers la position basse du levier correspond à une augmentation de la force de rappel exercée par le ressort, puisque la position basse correspond à un alongement du ressort du rappel et à une modification angulaire de sa position par rapport au bras d'essuie-glace.

S'il peut être considéré que ce dispositif apporte une solution au problème de décollement des bras d'essuie-glace en cas de vitesse élevée du véhicule, sa mise en oeuvre demeure complexe et délicate. Il est, en effet, nécessaire de prévoir un aménagement particulier des dispositifs d'essuie-glace conventionnels, puisque les arbres d'entraînement doivent être modifiés et que des dispositifs annexes de commande de la tige mobile doivent être prévus.

Par ailleurs, ce dispositif se révèle fragile sur le plan mécanique, en raison des efforts importants qui s'exercent sur la tige mobile dont le diamètre est, cependant, nécessairement limité. En outre, le montage du levier pivotant, à l'intérieur des branches constituant la noix, conduit à l'utilisation d'une tige de maintien du ressort de rappel qui est de dimension et de longueur réduites. On constate ainsi que la sollicitation mécanique du ressort de rappel au niveau du levier pivotant peut être à l'origine de déformations et de torsions sur l'axe de pivotement et sur le levier.

On connaît, enfin, la demande de brevet **FR-A-2 507 554** qui se propose de réduire la tendance au décollement des essuie-glaces, sans avoir recours à des pièces supplémentaires traversant la carosserie du véhicule. A cette fin, le bras d'essuie-glace est monté solidaire de l'arbre d'entraînement de l'essuie-glace, lequel arbre est monté mobile à coulissement le long de son axe longitudinal. Le montage du bras d'essuie-glace est tel que son axe porteur est monté solidaire, avec simple possibilité de rotation autour de son axe, d'un élément de connexion enserrant l'arbre d'entraînement de l'essuie-glace, l'axe porteur occupant, en conséquence, une position fixe sur l'élément de connexion. Un ressort de rappel, interposé entre le bras d'essuie-glace et un élément d'accrochage, assure le rappel du bras vers le pare-brise par rotation autour de son axe porteur. Le coulissement de l'arbre d'entraînement permet de modifier la position du bras et, par là même, le bras de levier du système, ainsi que la tension du ressort qui développe alors une force de contact variable, d'autant plus importante que l'axe de rotation du bras d'essuie-glace est éloigné de la surface à essuyer et de l'axe de rappel du ressort. Ce système nécessite d'avoir recours à un arbre d'entraînement spécialement dimensionné et met en oeuvre de nombreuses pièces de montage qui contribuent à entretenir une fragilité globale dudit système. Par ailleurs, le montage proposé n'autorise pas de variations importantes de la force de contact et n'est pas transposable sur un véhicule classique sans modification préalable.

L'objet de la présente invention est donc de proposer un nouveau système d'essuie-glace portant remède aux problèmes de fonctionnement et de décollement des essuie-glaces en cas de vitesse élevée du véhicule, ne présentant pas les inconvénients des dispositifs de l'art antérieur, dont la mise en oeuvre soit simple et dont le montage soit possible sans modification du véhicule.

Un autre objet de l'invention vise à réaliser un système d'essuie-glace dans lequel la force de contact de l'essuie-glace sur la surface à essuyer est variable, de manière continue au gré de l'utilisateur.

Un autre objet de l'invention est de proposer un système d'essuie-glace particulièrement robuste et apte à subir, sans dommage et durablement, une augmentation de la force de rappel exercée par le ressort de maintien de l'essuie-glace contre le pare-brise.

### EXPOSE DE L'INVENTION :

L'objet de l'invention est atteint grâce à un système d'essuie-glace à force de contact réglable comportant :
- un bras d'essuie-glace apte à supporter un balai d'essuyage et monté solidaire en rotation d'un arbre d'entraînement du système par une noix de raccordement faisant partie d'un élément de connexion,
- un axe porteur assurant une liaison entre le bras d'essuie-glace et l'élément de connexion et permettant une rotation du bras, entre au moins une position de travail contre la surface à essuyer et au moins une position de dégagement,
- un moyen de rappel élastique du bras d'essuie-glace vers sa position de travail, interposé entre le bras et l'élément de connexion pour définir un axe de rappel, ledit moyen étant apte à produire, contre la surface à essuyer, une force de contact du bras proportionnelle à l'éloignement de l'axe porteur par rapport à l'axe du moyen de rappel élastique,
- un moyen de commande de la force de contact,
caractérisé en ce que l'élément de connexion est aménagé afin que l'axe porteur se trouve monté mobile relativement par rapport à la noix de raccordement, selon une trajectoire le long de laquelle l'axe porteur est sollicité en permanence par l'intermédiaire du moyen de rappel en éloignement de l'axe de rappel et en ce que le moyen de commande de la force de contact est constitué par un moyen de blocage s'opposant à l'éloignement de l'axe porteur par rapport à l'axe de rappel.

Diverses autres caractéristiques ressortent de la description faite ci-dessous en référence aux dessins annexés qui montrent, à titre d'exemples non limitatifs, des formes de réalisation de l'objet de l'invention.

### BREVE DESCRIPTION DES DESSINS :

La **fig. 1** représente une vue générale en perspective d'un système d'essuie-glace conforme à l'invention.

La **fig. 2** montre une vue éclatée d'un système d'essuie-glace, analogue à celui montré à la **fig. 1.**

La **fig. 3** représente une vue en coupe longitudinale du système d'essuie-glace montrant ce dernier dans une position correspondant à une force de contact maximale.

La **fig. 4** est une vue de dessus du système d'essuie-glace.

La **fig. 5** représente une vue, analogue à la **fig. 3**, montrant un système d'essuie-glace dans une position où la force de contact est minimale.

La **fig. 6** montre une variante de réalisation du moyen de commande.

### MEILLEURE MANIERE DE REALISER L'INVENTION :

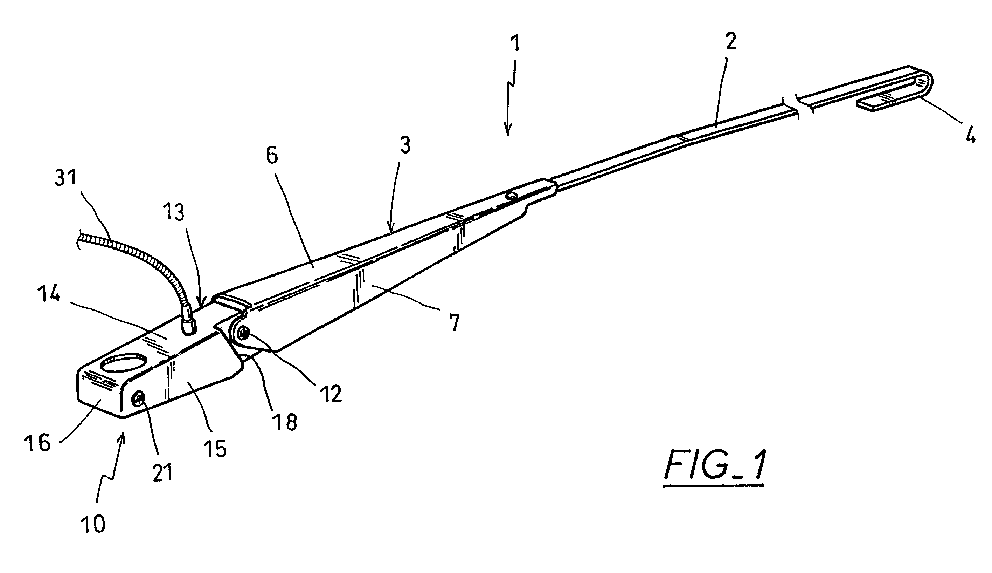

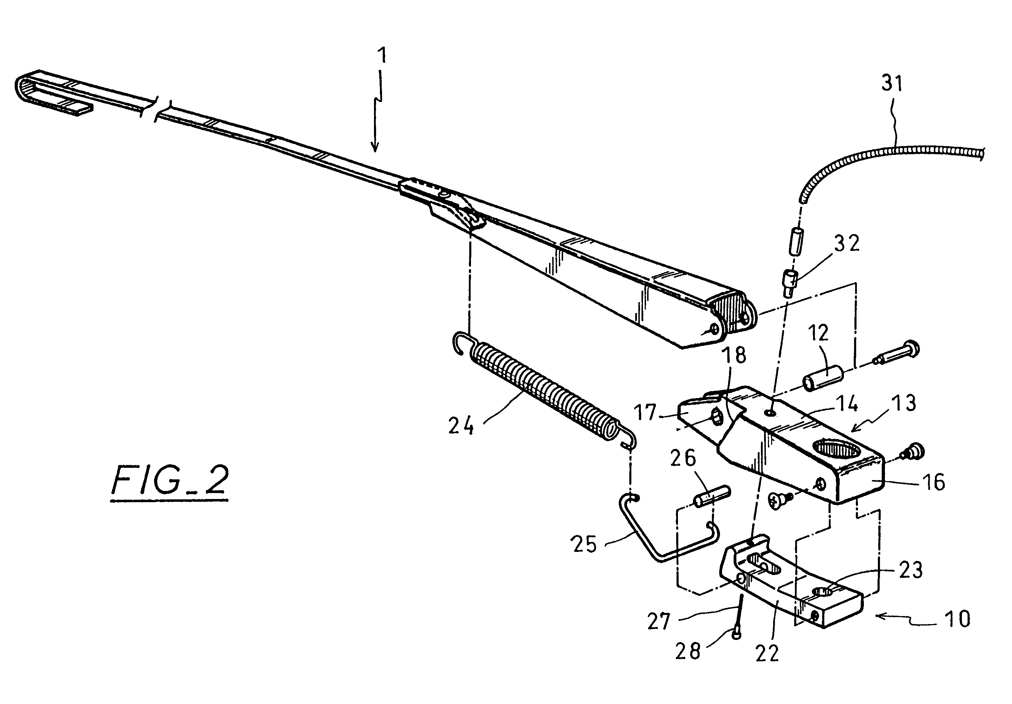

Le système d'essuie-glace, représenté à la **fig. 1**, comprend un bras d'essuie-glace **1**, constitué d'un bras de support **2** et d'une poutre de tête **3**. Le bras de support **2** est, généralement, constitué d'une tige métallique, de section pleine, présentant, à une extrémité **4**, un dispositif de liaison apte à recevoir et retenir un balai d'essuyage (non représenté sur la figure). Dans l'exemple représenté aux **fig. 1** et **2**, le dispositif de liaison présente une courbure dans laquelle peuvent venir s'engager les éléments d'accrochage du balai d'essuyage.

L'extrémité opposée **5** du bras de support **2** est destinée à servir d'élément de fixation sur la poutre de tête **3** qui, dans l'exemple représenté, se présente sous la forme d'une poutre, de préférence métallique, de section transversale en "**U**" définissant une âme **6** et deux flancs latéraux **7**. De préférence, l'extrémité **5** est fixée, par tout moyen connu, sur l'âme **6** et, par exemple, par soudage ou, encore, par rivetage, le bras de support **2** se prolongeant au-delà de la zone de fixation par une languette **8** pourvue d'un perçage et s'étendant à l'intérieur de la section en "**U**" définie par la poutre de support **3**.

Les flancs latéraux **7** définissent, à l'extrémité opposée à la zone de fixation avec le bras de support **2**, une paire d'oreilles de fixation **11** dans lesquelles sont ménagés, de manière symétrique, deux orifices destinés à servir de siège de réception à un axe de montage porteur **12** constituant un élément de liaison mobile et rotatif entre le bras d'essuie-glace et un élément de connexion **10** avec un arbre d'entraînement (non représenté sur les figures), destiné à assurer un mouvement de va et vient du système d'essuie-glace.

Dans l'exemple représenté, l'élément de connexion **10** comprend une noix de raccordement **22** et un levier **13** en forme de coiffe allongée, de section transversale sensiblement en "**U**", définissant une âme centrale **14** bordée par deux bords latéraux **15**. La coiffe comporte, à une extrémité, une paroi terminale **16** pleine ou évidée et, à l'autre extrémité, deux branches symétriques **17** espacées, munies d'orifices de réception pour l'axe porteur **12**, et destinées à venir s'insérer entre les oreilles de fixation **11** et à l'intérieur de la section en "**U**" de la poutre de support **3**.

Les branches **17** peuvent, bien évidemment, être constituées de pièces rapportées et soudées, par exemple sur le corps de la coiffe, ou faire partie intégrante de la coiffe elle-même. De préférence, la coiffe présente, près de l'extrémité de raccordement avec la poutre de support **3**, deux épaulements **18** ménagés, par exemple, dans les bords latéraux et l'âme centrale **14**, destinés à servir de butée d'appui pour les tranches des oreilles de fixation **11** lors de la rotation relative du bras **1** et du levier **13** autour de leur axe commun **12**.

Le levier **13** est lui-même monté à rotation libre et déplaçable, de préférence à l'extrémité opposée aux branches **17**, par un axe **21** parallèle et de direction identique à l'axe porteur **12**, sur une noix de raccordement **22**, solidaire d'un arbre d'entraînement, non représenté aux figures, et destiné à être calé angulairement dans un orifice **23** ménagé dans la noix de raccordement **22** pour conférer au système un mouvement alternatif d'essuyage.

Le montage ainsi réalisé constitue une articulation à genouillère formée du bras d'essuie-glace **1**, d'une part, et du levier **13**, d'autre part, ces deux éléments formant entre eux un angle variable suivant le débattement angulaire de l'articulation et autorisant l'axe porteur **12** à se déplacer librement sur l'élément de connexion **10**.

Avantageusement, la noix de raccordement **22** se présente sous la forme d'une pièce métallique, de forme sensiblement parallélépipédique, et comportant un point de fixation pour un moyen de rappel élastique chargé de produire une force de contact capable de maintenir en appui le bras d'essuie-glace **1** contre la surface à essuyer. Suivant le type de véhicule, la forme de la noix de raccordement **22** peut varier et, en particulier, la coiffe **13** peut ne recouvrir que partiellement la noix de raccordement **22**, cette dernière pouvant même traverser en partie ou en totalité la paroi terminale **16**.

De préférence, le moyen de rappel élastique est constitué d'un ressort de traction **24**, dont l'axe longitudinal **x-x'** s'étend dans le plan de symétrie **P** du bras d'essuie-glace **1** et selon la direction de l'axe longitudinal dudit bras. Le ressort **24** est fixé, par une extrémité, dans l'orifice de la languette **8** et, par l'autre extrémité, directement ou au moyen d'une pièce intermédiaire, telle qu'un crochet **25** sur l'élément de connexion **10** par une tige entretoise **26**, par exemple. Le ressort **24** définit ainsi un axe de rappel confondu avec son axe longitudinal **x-x'**.

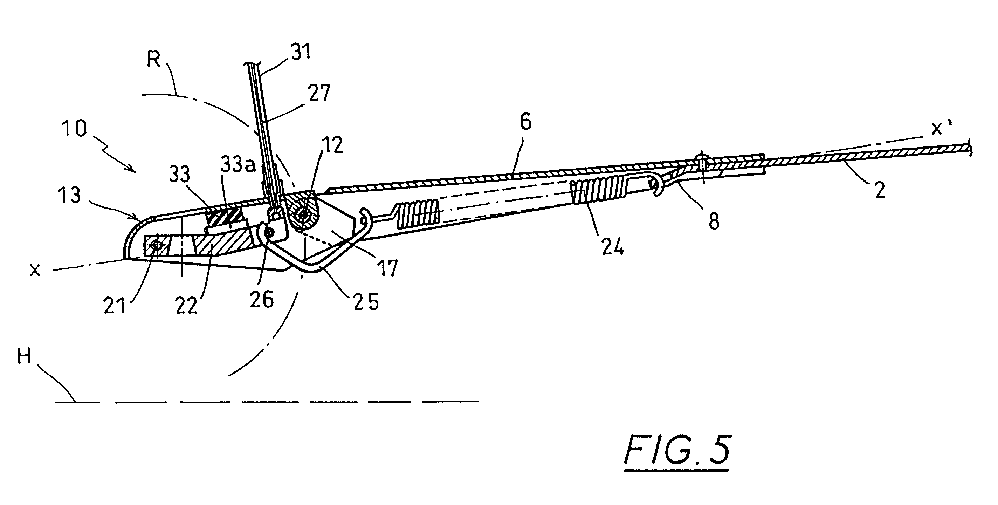

Il est particulièrement avantageux que la noix de raccordement **22** forme un angle obtus sur sa face dirigée vers le levier **13** ou soit incurvée, afin que, par rapport à un plan horizontal fictif **H**, l'axe **26** soit plus éloigné que l'axe **21** dudit plan, d'une valeur par exemple de 8 mm. Cette disposition facilite l'action du ressort **24** à partir ou au voisinage de sa position d'équilibre (force de rappel faible ou quasiment nulle) et empêche le bras de se stabiliser dans une position d'équilibre (**fig. 5**).

De manière avantageuse, grâce au montage choisi et à la force de rappel exercée par le ressort de traction **24** sur le bras d'essuie-glace **1**, l'articulation à genouillère confère deux libertés de mouvement au bras d'essuie-glace **1**, lorsque ce dernier est en appui contre la surface à essuyer, à savoir une rotation autour de l'axe porteur **12** et une translation selon le cercle **R** autour de l'axe **21** lors de la rotation du levier **13**. Le montage proposé provoque, sous l'action du ressort **24**, une tendance permanente à la réduction du débattement angulaire de l'articulation à genouillère conduisant à définir une trajectoire d'éloignement de l'axe porteur **12** par rapport a l'axe de rappel **x-x'** ou, encore, à la surface à essuyer. Cet éloignement provoque une variation de la tension du ressort **24** en fonction du trajet effectué par l'axe porteur **12** le long du cercle **R**, et se traduit par une augmentation de la force de contact du bras **1** sur la surface à essuyer qui est proportionnelle à la distance d'éloignement. Inversement, le rapprochement de l'axe porteur **12** provoque une diminution de la force de contact. Le mécanisme impliqué est à rapprocher du flambage d'une pièce allongée, lorsque celle-ci est soumise à une compression par ses deux extrémités, le point de flambage étant ici matérialisé, dans le plan **P**, par un point situé sur l'axe **12**.

Bien évidemment, à la place du ressort de traction **24**, il est possible d'utiliser tout moyen de rappel élastique équivalent. De même, il est possible d'utiliser un ressort de compression complémentaire qui peut être, par exemple, monté entre la noix de raccordement **22** et le levier **13** ou entre le bras d'essuie-glace **1** et un élément de support prolongeant la noix de raccordement **22**.

De manière préférentielle, le moyen de commande du débattement angulaire de l'articulation à genouillère, à l'encontre de la force de rappel exercée par le moyen de rappel élastique **24**, est constitué d'un moyen de commande à distance comprenant un câble de traction **27**, monté et fixé par une extrémité comportant une tête de blocage **28** sur l'élément de connexion **22** et, de préférence, à l'extrémité opposée à l'axe **21**. Le câble de traction **27** traverse le levier **13**, en l'occurrence l'âme centrale **14** de la coiffe, et est relié, par son autre extrémité (non représentée aux figures), à un dispositif de commande de la tension du câble **27**. Le câble **27** est pourvu, dans sa partie externe au levier **13**, d'une gaine de tensionnement **31**, à filets hélicoïdaux par exemple, en appui de butée contre une bague d'arrêt **32**, elle-même en appui par un épaulement contre la face externe de l'âme centrale **14**. Avantageusement, la bague d'arrêt **32** peut présenter une forme coudée pour conférer une direction spécifique au câble de tensionnement. L'autre extrémité du câble **27** est reliée à un dispositif classique de mise en tension d'un câble (non représenté aux figures), comportant, par exemple, une poulie d'enroulement.

Il est bien évident qu'à la place du dispositif de commande à distance, composé d'un câble de tensionnement, d'autres moyens sont utilisables, tels un poussoir ou bien, encore, un piston. De la même façon, il est possible d'utiliser un câble commandé par un dispositif manuel ou par un dispositif comportant un moteur électrique ou un électro-aimant ou même une télécommande.

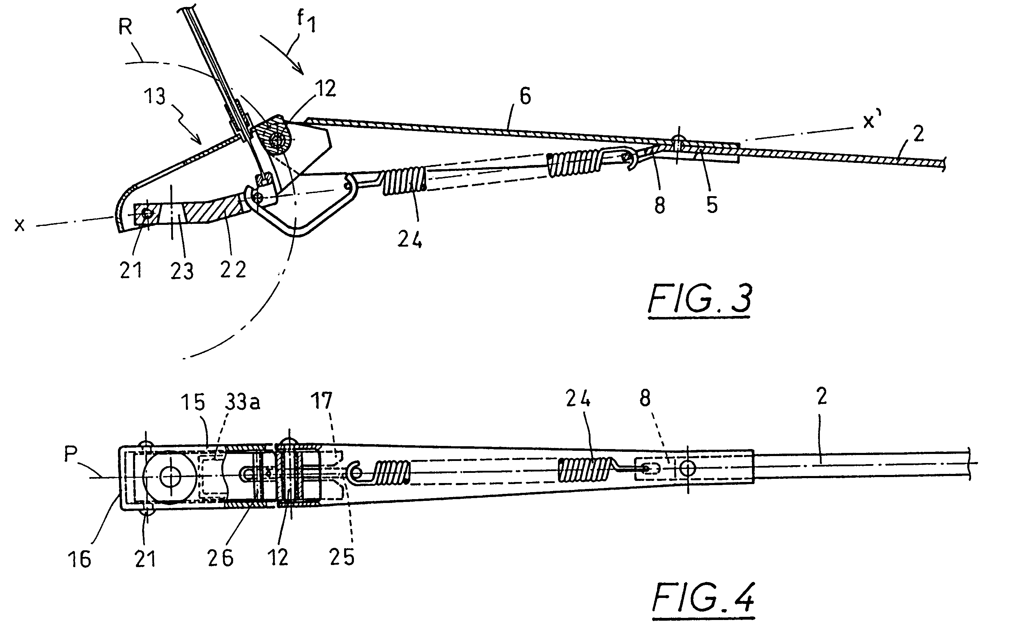

La **fig. 3** représente une position de travail du système d'essuie-glace correspondant à un débattement angulaire minimal de l'articulation à genouillère et à une force de contact qui peut être qualifiée de maximale. Lorsque le conducteur d'un véhicule souhaite diminuer la force de contact du bras d'essuie-glace **1** sur la surface à essuyer, il va alors commander le dispositif de mise en tension du câble **27**, lequel, par augmentation de sa tension et par réaction de la bague **32** sur le levier **13**, va provoquer le pivotement du levier **13** autour de l'axe **21**, en direction de la flèche **f₁** provoquant la rotation de l'axe porteur **12** le long d'une portion du cercle **R**. Lors de ce pivotement, le bras d'essuie-glace **1** va, à la fois, subir une légère rotation autour de l'axe porteur **12** dans une direction opposée à la flèche **f₁** et, également, subir une translation selon la flèche **f₁** qui va se traduire, par appui sur la surface à essuyer, par une augmentation du débattement angulaire modifiant angulairement l'effort exercé par le ressort **24** sur le bras d'essuie-glace **1** et se traduisant par une diminution de la force de contact sur la force à essuyer.

La **fig. 5** montre l'une des positions extrêmes que peut atteindre l'articulation à genouillère selon l'invention et qui correspond à une valeur pratiquement minimale de la force de contact exercée par le bras d'essuie-glace **1** sur la surface à essuyer, laquelle position correspond à un débattement angulaire sensiblement maximum de l'articulation à genouillère. Lorsque le conducteur souhaite augmenter la force de contact du système selon l'invention, il lui suffit de relâcher la tension du câble **27**, la force de traction du ressort **24** tendant naturellement à ramener l'articulation à genouillère vers un débattement angulaire réduit, dont la limite extrême est déterminée par la mise en butée des tranches des oreilles de fixation **11** contre les épaulements **18**.

On comprend donc que, dans la position correspondant à la force de contact théorique minimale, l'axe géométrique de l'axe **12** peut venir se confondre avec l'axe longitudinal **x-x'** du ressort **24**, l'articulation à genouillère étant, également, pratiquement dans une position d'équilibre. Pour favoriser le retour vers des positions de l'articulation à genouillère correspondant à des forces de contact maximales ou augmentées, il peut être avantageux de disposer, entre la noix de raccordement et la face interne de l'âme centrale **14**, une pièce de rebond **33** (**fig. 5**) en un matériau élastique. Cette pièce de rebord **33** peut être avantageusement insérée dans une pièce de maintien ou portant deux épaulements latéraux **33a** (**fig. 4** et **5**) de support, solidaires de la noix de raccordement **22** et assurant une fonction de guidage et de soulagement de l'axe **21**, lors du déplacement de la genouillère. Avantageusement également, la noix de raccordement **22** sera coudée pour permettre de monter la tige entretoise **26** au-dessus de l'axe **21** par rapport à un plan fictif de référence, afin de faciliter le rappel du ressort conduisant à un débattement angulaire réduit.

Il est, bien évidemment, possible de supprimer le levier **13** et de monter directement le bras d'essuie-glace **1** sur la noix de raccordement **22**. Dans ce cas, il est nécessaire de ménager au moins une lumière de glissement dans la masse de la noix de raccordement dans laquelle l'axe porteur **12** est monté mobile avec possibilité de glissement. La lumière peut être courbe et définir une trajectoire, de type circulaire, identique, par exemple, à un arc de cercle, de même centre que le cercle **R** par exemple. La lumière peut, également, être rectiligne et, avantageusement, oblique, l'axe longitudinal de la lumière définissant alors un axe sécant à l'axe de rappel **x-x'** et étant orienté de telle façon que l'éloignement de l'axe porteur **12** par rapport à l'axe **x-x'** se traduise par une augmentation de la force de contact de l'essuie-glace.

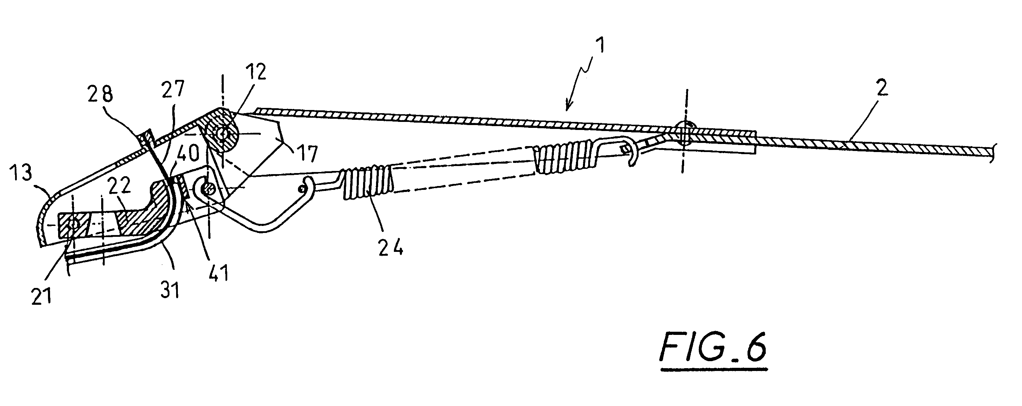

La **fig. 6** illustre une autre variante de réalisation qui diffère des montages précédents par une disposition inversée du moyen de commande du débattement angulaire de l'articulation à genouillère. Le câble **27** traverse le levier **13** et est maintenu par tensionnement en appui contre la face supérieure **14** du levier par une tête de blocage **28**. Le câble **27** pénètre à l'intérieur de la noix de raccordement **22** au moyen d'un perçage **40** et débouche sous ladite noix **22**. L'autre extrémité du câble est reliée à un dispositif classique de mise en tension du câble. La gaine de tensionnement **31** est insérée dans un conduit cylindrique **41** ménagé dans la noix de raccordement **22** et prolongeant le perçage **40** en direction de la face inférieure de la noix de raccordement. L'extrémité de la gaine **31** est en appui contre un épaulement annulaire situé entre le perçage **40** et le conduit cylindrique **41**. Le fonctionnement de cette variante est identique aux variantes précédemment décrites. Cette variante présente, cependant, l'avantage de permettre une présentation plus soignée, dans la mesure où le câble **27** n'est pratiquement pas visible de l'extérieur. En outre, cette variante libère l'extrémité de la noix de raccordement **22** sur laquelle est monté l'axe **26** qui peut alors être disposé au plus près de cette extrémité et près de sa limite supérieure, ce qui autorise un positionnement de l'axe porteur **12** pratiquement sur l'axe **x-x'**. Cette disposition augmente donc la plage de variation de la force contact jusqu'à des valeurs très faibles.

Le système d'essuie-glace conforme à l'invention présente l'avantage de proposer à un utilisateur une possibilité de réglage continu de la force de contact du bras d'essuie-glace sur la surface à essuyer et présente l'avantage supplémentaire de pouvoir être adapté, sans modification aucune, à la place des systèmes d'essuie-glace existants. En effet, le système selon l'invention s'accomode des arbres d'entraînement classiques, puisque ce dernier ne joue aucun rôle particulier, hormis sa fonction d'entraînement classique. En particulier, il est adaptable sur les arbres d'essuie-glace dont l'arrivée d'eau se fait à travers l'axe d'entraînement lui-même.

Le système d'essuie-glace selon l'invention comporte, également, un nombre limité de pièces en mouvement, permettant une fabrication particulièrement aisée, pour un faible coût et conduisant à une robustesse éprouvée. Enfin, l'articulation à genouillère rend possibles des variations de la force de contact particulièrement importantes, ce qui permet d'envisager des applications multiples et, en particulier, sur des véhicules présentant des surfaces à nettoyer particulièrement importantes.

Le système selon l'invention soulage également, dans sa ou ses positions de pression minimale, la partie de frottement des balais d'essuyage, ce qui conduit à augmenter la durée de vie et d'utilisation desdits éléments.

Les éléments constitutifs du système selon l'invention peuvent être standardisés, puisque par simple réglage de la force de contact du balai d'essuyage il est possible de trouver, pour chaque véhicule, la force de contact appropriée à l'aide d'une simple manipulation.

L'invention n'est pas limitée aux exemples décrits et représentés, car diverses modifications peuvent y être apportées sans sortir de son cadre.

### POSSIBILITE D'APPLICATION INDUSTRIELLE :

L'invention trouve son application préférentielle dans le domaine de la construction automobile en tant qu'essuie-glace pour véhicules de transport de tourisme ou professionnel.

## Revendications

1. Système d'essuie-glace, à force de contact réglable, comportant :
- un bras d'essuie-glace (**1**) apte à supporter un balai d'essuyage et monté solidaire en rotation d'un arbre d'entraînement du système par une noix de raccordement (**22**) faisant partie d'un élément de connexion (**10**),
- un axe porteur (**12**) assurant une liaison entre le bras d'essuie-glace (**1**) et l'élément de connexion (**10**) et permettant une rotation du bras (**1**), entre au moins une position de travail contre la surface à essuyer et au moins une position de dégagement,
- un moyen de rappel élastique (**24**) du bras d'essuie-glace (**1**) vers sa position de travail, interposé entre le bras (**1**) et l'élément de connexion (**10**) pour définir un axe de rappel (**x-x'**), ledit moyen étant apte à produire, contre la surface à essuyer, une force de contact du bras (**1**) proportionnelle à l'éloignement de l'axe porteur (**12**) par rapport à l'axe (**x-x'**) du moyen de rappel élastique (**24**),
- un moyen de commande (**27, 31, 32**) de la force de contact,
caractérisé en ce que l'élément de connexion (**10**) est aménagé afin que l'axe porteur (**12**) se trouve monté mobile relativement par rapport à la noix de raccordement (**22**), selon une trajectoire le long de laquelle l'axe porteur est sollicité en permanence par l'intermédiaire du moyen de rappel (**24**) en éloignement de l'axe de rappel (**x-x'**), et en ce que le moyen de commande (**27, 31, 32**) de la force de contact est constitué par un moyen de blocage s'opposant à l'éloignement de l'axe porteur (**12**) par rapport à l'axe de rappel (**x-x'**).

2. Système selon la revendication 1, caractérisé en ce que l'élément de connexion (**10**) est aménagé de manière que l'axe porteur (**12**) est monté mobile selon une trajectoire rectiligne.

3. Système selon la revendication 1, caractérisé en ce que l'élément de connexion (**10**) est aménagé de manière que l'axe porteur (**12**) est monté mobile selon une trajectoire courbe.

4. Système selon la revendication 2, caractérisé en ce que l'élément de connexion (**10**) est aménagé de manière que l'axe porteur (**12**) est monté mobile selon une trajectoire oblique par rapport à l'axe de rappel (**x-x'**).

5. Système selon la revendication 3, caractérisé en ce que l'élément de connexion (**10**) comporte un levier (**13**) articulé, d'une part, sur la noix de raccordement (**22**) autour d'un axe (**21**), parallèle et de même direction que l'axe porteur (**12**) et, d'autre part, autour de l'axe porteur (**12**) pour constituer une articulation à genouillère.

6. Système selon la revendication 3, caractérisé en ce que le bras d'essuie-glace (**1**) est relié à l'élément de connexion (**10**) par l'intermédiaire d'une glissière, de préférence courbe, ménagée dans ledit élément (**10**) constitué d'une noix de raccordement (**22**) à l'arbre d'entraînement du système.

7. Système selon les revendications 5 ou 6, caractérisé en ce que le moyen de rappel (**24**) est un ressort de traction interposé entre le bras et la noix de raccordement (**22**) et en ce que le moyen de commande (**27, 31, 32**) est un moyen réversible de freinage et de blocage de l'action du ressort (**24**).

8. Système selon la revendication 7, caractérisé en ce que le moyen de commande est interposé entre le levier (**13**) et la noix de raccordement (**22**) pour freiner et bloquer la rotation du levier (**13**) à l'encontre du ressort (**24**).

9. Système selon la revendication 8, caractérisé en ce que le moyen de commande comporte un câble (**27**) fixé, par une extrémité (**28**), sur l'élément de connexion (**10**) et traversant le levier (**13**) contre lequel s'appuient un moyen d'arrêt (**32**) et une gaine (**31**).

10. Système selon la revendication 8, caractérisé en ce que le moyen de commande comporte un câble (**27**) traversant le levier (**13**) et la noix de raccordement (**22**), fixé par une extrémité (**28**) sur le levier (**13**), ainsi qu'une gaine de tensionnement (**31**) en appui sur la noix de raccordement (**22**).

11. Système selon la revendication 9 ou 10, caractérisé en ce que le moyen de commande est un moyen de commande à distance.

12. Système selon la revendication 5, caractérisé en ce que le levier (**13**) constitue une coiffe de protection pour la noix de raccordement (**22**) et comporte deux bords latéraux (**15**) comportant des épaulements (**18**) limitant le débattement angulaire de l'articulation à genouillère à l'encontre de l'action du moyen de rappel élastique (**24**).

13. Système selon l'une des revendications précédentes, caractérisé en ce que l'élément de connexion comporte au moins une pièce élastique (**33**) servant de pièce de rebond pour initier le mouvement de rotation du levier (**13**), lorsque ce dernier vient en contact avec l'élément de connexion (**10**), ladite pièce (**33**) étant insérée entre deux épaulements (**33a**) de guidage du levier (**13**).

## Claims

1. Windshield wiper system, with adjustable contact force, comprising:
- a wiper arm (1) adapted to support a wiper and mounted fast in rotation with a shaft for driving the system by a connection block (22) forming part of a connection element (10),
- a carrier shaft (12) ensuring a connection between the wiper arm (1) and the connection element (10) and permitting a rotation of the arm (1), between at least one work position against the surface to be wiped and at least one position of disengagement,
- a means (24) for elastic return of the wiper arm (1) towards its work position, said means being interposed between the arm (1) and the connection element (10) in order to define a return axis (x-x'), said means being capable of producing against the surface to be wiped, a contact force of the arm (1) which is proportional to the away motion of the carrier shaft (12) with respect to the axis (x-x') of the elastic return means (24),
- means (27, 31, 32) for controlling the contact force,
characterized in that the connection element (10) is so arranged that the carrier shaft (12) is mounted to be displaceable with respect to the connection block (22) on a path along which it is permanently biased via the return means (24) away from the return axis (x-x'), and in that the control means (27, 31, 32) of the contact force is constituted by a locking means opposing the away motion of the carrier shaft (12) with respect to the return axis (x-x').

2. System according to claim 1, characterized in that the connection element (10) is so arranged that the carrier shaft (12) is mounted to be displaceable along a rectilinear path.

3. System according to claim 1, characterized in that the connection element (10) is so arranged that the carrier shaft (12) is mounted to be displaceable along a curved path.

4. System according to claim 2, characterized in that the connection element (10) is so arranged that the carrier axis (12) is mounted to be displaceable along a path which is oblique with respect to the return axis (x-x').

5. System according to claim 3, characterized in that the connection element (10) comprises a lever (13) articulated, on the one hand, on the connection block (22) about an axis (21), parallel and of the same direction as the carrier shaft (12), and on the other hand, about the carrier shaft (12) itself to constitute a toggle joint.

6. System according to claim 3, characterized in that the wiper arm (1) is connected to the connection element (10) via a slideway, preferably curved, formed in said element (10) constituted by a connection block (22) to the drive shaft of the system.

7. System according to claims 5 or 6, characterized in that the return means (24) is a draw spring interposed between the arm and the connection block (22) and in that the control means (27, 31, 32) is a reversible means for braking and locking the action of the spring (24).

8. System according to claim 7, characterized in that the control means is interposed between the lever (13) and the connection block (22) to brake and lock the rotation of the lever (13) against the spring (24).

9. System according to claim 8, characterized in that the control means comprises a cable (27) fixed, by one end (28), on the connection element (10) and traversing the lever (13) against which a stop means (32) and a sheath (31) abut.

10. System according to claim 8, characterized in that the control means comprises a cable (27) traversing the lever (13) and the connection block (22), fixed by one end (28) on the lever (13), as well as a tensioning sheath (31) in abutment on the connection block (22).

11. System according to claim 9 or 10, characterized in that the control means is a remote-control means.

12. System according to claim 5, characterized in that the lever (13) constitutes a protection cover for the connection block (22) and comprises two lateral edges (15) comprising shoulders (18) limiting the angular clearance of the toggle joint against the action of the elastic return means (24).

13. System according to one of the preceding claims, characterized in that the connection element comprises at least one elastic piece (33) serving as rebound piece for initiating the movement of rotation of the lever (13), when the latter comes into contact with the connection element (10), said piece (33) being inserted between two shoulders (33a) for guiding the lever (13).

## Patentansprüche

1. Scheibenwischersystem mit gesteuerter Berührungskraftregelung, bestehend aus:
- einem Scheibenwischerarm (1), der geeignet ist, ein Wischerblatt zu halten, und mit einem Verbindungskern (22), der Teil eines Verbindungselements (10) ist, drehfest an einer Antriebswelle des Systems montiert ist,
- einer Tragachse (12), die die Verbindung zwischen dem Scheibenwischerarm (1) und dem Verbindungselement (10) gewährleistet und eine Drehbewegung des Arms (1) zwischen mindestens einer Arbeitsstellung an der zu wischenden Fläche und mindestens einer abgehobenen Stellung ermöglicht,
- einem federnden Rückstellmittel (24) zum Rückstellen des Scheibenwischerarms (1) in seine Arbeitsstellung, das zwischen dem Arm (1) und dem Verbindungselement (10) angeordnet ist, um eine Rückstellachse (x-x') zu bestimmen, wobei das genannte Mittel geeignet ist, gegen die zu wischende Fläche eine Berührungskraft des Arms (1) auszuüben, die sich proportional zu der Entfernung der Tragachse (12) von der Achse (x-x') des federnden Rückstellmittels (24) verhält,
- einem Steuermittel (27, 31, 32) für die Berührungskraft,
dadurch gekennzeichnet, daß das Verbindungselement (10) so ausgeführt ist, daß die Tragachse (12) zu dem Verbindungskern (22) auf einem Weg beweglich montiert ist, auf dem die Tragachse über das Rückstellmittel (24) beim Entfernen von der Rückstellachse (x-x') ständig belastet wird, und daß das Steuermittel (27, 31, 32) für die Berührungskraft aus einem Sperrmittel besteht, das dem Sich-Entfernen der Tragachse (12) von der Achse (x-x') entgegenwirkt.

2. Scheibenwischersystem nach Anspruch 1,
dadurch gekennzeichnet, daß das Verbindungselement (10) so ausgeführt ist, daß die Tragachse (12) auf einem geradlinigen Weg beweglich montiert ist.

3. Scheibenwischersystem nach Anspruch 1,
dadurch gekennzeichnet, daß das Verbindungselement (10) so ausgeführt ist, daß die Tragachse (12) auf einem gekrümmten Weg beweglich montiert ist.

4. Scheibenwischersystem nach Anspruch 2,
dadurch gekennzeichnet, daß das Verbindungselement (10) so ausgeführt ist, daß die Tragachse (12) auf einem Weg beweglich montiert ist, der schräg zur Rückstellachse (x-x') verläuft.

5. Scheibenwischersystem nach Anspruch 3,
dadurch gekennzeichnet, daß das Verbindungselement (10) einen Hebel (13) aufweist, der einerseits an dem Verbindungskern (22) um eine Achse (21) gelenkig angebracht ist, die parallel zur Tragachse (12) und in der gleichen Richtung liegt, und andererseits um die Tragachse (12) herum gelenkig angebracht ist, um eine Kniegelenkverbindung zu bilden.

6. Scheibenwischersystem nach Anspruch 3,
dadurch gekennzeichnet, daß der Scheibenwischerarm (1) mit dem Verbindungselement (10) über eine vorzugsweise gebogene Gleitschiene verbunden ist, die in dem genannten Verbindungselement (10) ausgeführt ist, das aus einem Verbindungskern (22) zur Verbindung mit der Antriebswelle des Systems besteht.

7. Scheibenwischersystem nach den Ansprüchen 5 oder 6,
dadurch gekennzeichnet, daß das Rückstellmittel (24) eine Zugfeder ist, die zwischen dem Arm und dem Verbindungskern (22) angeordnet ist, und daß das Steuermittel (27, 31, 32) ein umkehrbares Mittel zum Bremsen und Sperren der Betätigung der Feder (24) ist.

8. Scheibenwischersystem nach Anspruch 7,
dadurch gekennzeichnet, daß das Steuermittel zwischen dem Hebel (13) und dem Verbindungskern (22) angeordnet ist, um die Drehbewegung des Hebels (13) gegen die Feder (24) zu bremsen und zu sperren.

9. Scheibenwischersystem nach Anspruch 8,
dadurch gekennzeichnet, daß das Steuermittel ein Kabel (27) umfaßt, das mit einem Ende (28) an dem Verbindungselement (10) befestigt ist und durch den Hebel (13) hindurch verläuft, an dem sich ein Sperrmittel (32) und eine Hülle (31) in Anlage befinden.

10. Scheibenwischersystem nach Anspruch 8,
dadurch gekennzeichnet, daß das Steuermittel ein Kabel (27), das durch den Hebel (13) und den Verbindungskern (22) hindurch verläuft und mit einem Ende (28) an dem Hebel (13) befestigt ist, sowie eine Spannhülle (31) umfaßt, die sich an dem Verbindungskern (22) in Anlage befindet.

11. Scheibenwischersystem nach Anspruch 9 oder 10,
dadurch gekennzeichnet, daß das Steuermittel ein Fernbedienungs-Steuermittel ist.

12. Scheibenwischersystem nach Anspruch 5,
dadurch gekennzeichnet, daß der Hebel (13) eine Schutzkappe für den Verbindungskern (22) bildet und zwei Seitenkanten (15) mit Absätzen (18) aufweist, die den Winkelausschlag der Kniegelenkverbindung gegen die Einwirkung des federnden Rückstellmittels (24) begrenzen.

13. Scheibenwischersystem nach einem der vorhergehenden Ansprüche,
dadurch gekennzeichnet, daß das Verbindungselement mindestens ein federndes Teil (33) aufweist, das als Prellteil dient, um die Drehbewegung des Hebels (13) einzuleiten, wenn letzterer in Berührung mit dem Verbindungselement (10) kommt, wobei das genannte Teil (33) zwischen zwei Absätze (33a) zur Führung des Hebels (13) eingesetzt ist.
